**Europäisches Patentamt**

**European Patent Office**

**Office européen des brevets**

(19)

(11) Veröffentlichungsnummer: **0 139 944**
**B1**

(12) # EUROPÄISCHE PATENTSCHRIFT

(45) Veröffentlichungstag der Patentschrift:
04.11.87

(51) Int. Cl.⁴: **C 09 B 67/22**

(21) Anmeldenummer: **84109604.3**

(22) Anmeldetag: **13.08.84**

(54) Modifizierte Diarylidpigmente und Verfahren zu ihrer Herstellung.

(30) Priorität: **18.08.83 DE 3329846**

(43) Veröffentlichungstag der Anmeldung:
**08.05.85 Patentblatt 85/19**

(45) Bekanntmachung des Hinweises auf die Patenterteilung:
**04.11.87 Patentblatt 87/45**

(84) Benannte Vertragsstaaten:
**CH DE FR GB IT LI**

(56) Entgegenhaltungen:
**DE-C-101 917**
**FR-A-2 084 544**
**FR-A-2 091 301**

(73) Patentinhaber: **BASF Lacke + Farben Aktiengesellschaft, Max- Winkelmann- Strasse 80, D-4400 Münster (DE)**

(72) Erfinder: **Liedek, Egon, Dr., Holunderweg 16, D-7300 Esslingen (DE)**
Erfinder: **Ruff, Wolfgang, Dr., Tiefenbachstrasse 93, D-7000 Stuttgart 61 (DE)**
Erfinder: **Berger, Gerhard, Dr., Banzhaldenstrasse 24, D-7000 Stuttgart 30 (DE)**
Erfinder: **1Sonneborn, Hans Walter, Dr., Lindenfirststrasse 14/1, D-7070 Schwaebisch-Gmuend (DE)**
Erfinder: **Kemper, Reinhard, Dr., Viernheimer Weg 41, D-6900 Heidelberg (DE)**

(74) Vertreter: **Rämisch, Friedrich, Dr., BASF Aktiengesellschaft Carl- Bosch- Strasse 38, D-6700 Ludwigshafen (DE)**

EP 0 139 944 B1

### Beschreibung

Diarylidpigmente stellen Disazoverbindungen dar, die durch Kuppeln eines gegebenenfalls am aromatischen Kern substituierten tetrazotierten Benzidins mit einer Kupplungskomponente hergestellt werden, die sich von einem Acetoacetarylamid oder einem 1-Aryl-3-methyl-5-pyrazolon ableitet. Die aus unterschiedlich substituierten Benzidinen und Kupplungskomponenten hergestellten Diarylidpigmente sind unter der Bezeichnung "Benzidingelb-" bzw. "Benzidinorange-Pigmente" bekannt und werden hauptsächlich für die Herstellung von Druckfarben verwendet. Im Hinblick auf die genannte Anwendung werden von der Anwendungstechnik hohe Anforderungen an die Eigenschaften, wie hohe Farbstärke, hoher Glanz und gute Transparenz, gestellt. Weiterhin sind Verfahren bekannt, mit denen eine Verbesserung der Anwendungseigenschaften von Benzidin-Pigmenten bezweckt werden sollen.

Aus der DE-PS 20 12 152 ist die Herstellung eines Disazopigmentgemisches bekannt, das durch Kupplung von tetrazotiertem 3,3'-Dichlor-4,4'-diamino-diphenyl mit einer oder mit zwei verschiedenen unpolaren und mit einer oder mit zwei verschiedenen polaren Kupplungskomponenten der Acetoacetarylid- oder 1-Arylpyrazolon-(5)-reihe erhalten wird. Dabei enthalten die polaren Komponenten im Vergleich zu den unpolaren Komponenten eine oder zwei Carbonsäure- und/oder Sulfonsäuregruppen. Die so erhältlichen Pigmentgemische leiten sich jeweils lediglich von einer Tetrazokomponente, dem 3,3'-Dichlor-4,4'-diamino-diphenyl ab, und die gegebenenfalls Sulfonsäurereste enthaltenden polaren Gruppen stehen immer in der Kupplungskomponente.

In der DE-AS 21 22 521 werden modifizierte Diarylidpigmente beschrieben, die außer dem Diarylidpigment noch einen wasserlöslichen Farbstoff aus tetrazotiertem Benzidin, gekuppelt mit einem Derivat des Acetoacetanilids, des 1-Phenyl-3-methyl-5-pyrazolons oder 2-Hydroxynaphthalin-3-carboxyanilids enthalten.

Aufgabe der vorliegenden Erfindung war es, modifizierte Diarylidpigmente bereitzustellen, welche die oben angegebenen Anforderungen erfüllen und die in den coloristischen und/oder anwendungstechnischen Eigenschaften den nicht modifizierten und den bekannten modifizierten Diarylidpigmenten überlegen sind.

Es wurde gefunden, daß in den Eigenschaften vorteilhafte modifizierte Diarylidpigmente, die a) ein Pigment aus einem tetrazotierten Benzidin gekuppelt mit Acetoacetaryliden oder gegebenenfalls am Phenylkern substituierten 1-Phenyl-3-methyl-5-pyrazolonen und b) eine darin eingearbeitete wasserlösliche Komponente oder deren Salz enthalten, vorliegen, wenn die wasserlösliche Komponente b) ein symmetrisch oder asymmetrisch gebautes Kupplungsprodukt einer tetrazotierten 4,4'-Diamino-2,2'-stilbendisulfosäure (nachstehend Flavonsäure genannt) und gegebenenfalls substituierten Acetoacetaryliden und/oder gegebenenfalls im Phenylkern substituierten 1-Phenyl-3-methyl-5-pyrazolonen ist.

Die Pigmente der genannten Art zeigen sehr gute Farbstärke, sehr gutes Glanzverhalten, hervorragende Transparenz und insbesondere im Offsetdruck ein verbessertes Druckverhalten. So kann zum Beispiel bei schnellaufenden Maschinen ein lästiges Spritzen der Druckfarbe vermieden werden.

Weiterhin bereichern die neuen Pigmente und die neuen Verfahren zur Herstellung dieser Pigmente die Technik, da nach den neuen Verfahren leistungsfähigere Pigmente auch in solchen Fällen erhalten werden, in denen die Leistungsfähigkeit der bekannten Verfahren begrenzt ist.

Auch Verbesserungen in den rheologischen Eigenschaften, besonders bei flüssigen Druckfarben, können durch die erfindungsgemäßen Pigmente erzielt werden. Als weiterer Vorteil der erfindungsgemäß modifizierten Diarylidpigmente ist ihre hervorragende Beständigkeit hinsichtlich der Transparenz beim Dispergieren bei höherer Temperatur zu erwähnen.

Der Anteil an der Komponente (b) in den modifizierten Diarylidpigmenten der Erfindung ist nicht kritisch, wenn eine Menge zugegen ist, die eine Verbesserung der anwendungstechnischen und/oder coloristischen Eigenschaften bewirkt. Im allgemeinen reichen - bezogen auf (a) - Mengen von 0,5 bis 5 Gew.% (b) aus. Vorzugsweise liegt der Gehalt an (b) bei 1 bis 3 Gew.%, bezogen auf (a).

Man kann auch größere Mengen an (b) anwenden, jedoch bringen diese dann keine anwendungstechnischen und/oder coloristischen Vorteile mehr.

Selbstverständlich können die erfindungsgemäßen modifizierten Diarylidpigmente außer (a) und (b) noch weitere Zusatzstoffe enthalten, z. B. Harze oder deren Derivate sowie oberflächenaktive Mittel. Geeignete Zusatzstoffe gehören zum Stand der Technik Zu den modifizierten Diarylidpigmenten gemäß der vorliegenden Erfindung zählen auch solche Diarylidpigmente (a), die aus einem oder mehreren Diarylidpigmenten bestehen und entweder durch mechanisches Mischen oder durch Mischkupplung entstanden sind. So können z. B. erfindungsgemäß modifizierte Diarylidpigmente aus den Komponenten der C.I. Pigmente Yellow 13 und 17 durch Mischkupplung synthetisiert werden.

Die den erfindungsgemäßen modifizierten Diarylidpigmenten zugrundeliegenden Diarylidpigmente (a) sind bekannt. Aus anwendungstechnischen Gründen sind vor allem die folgenden hervorzuheben:

C.I. Pigment Yellow 12, C.I. No. 21090;
C.I. Pigment Yellow 13, C.I. No. 21100;
C.I. pigment Yellow 14, C.I. No. 21095;

C.I. Pigment Yellow 17, C.I. No. 21105;
C.I. Pigment Yellow 83, C.I. No. 21108;
C.I. Pigment Orange 34, C.I. No. 21115
sowie Mischkupplungen von tetrazotiertem
3,3'-Dichlor-4,4'-diaminodiphenyl mit den in den
vorstehend genannten Pigmenten enthaltenen
Kupplungskomponenten.

Die neuen modifizierten Diarylidpigmente
können nach verschiedenen Verfahren
hergestellt werden.

Man kann entweder (1) die wasserlösliche
Komponente (b) für sich herstellen und diese
dem Diarylidpigment (a) zumischen, (2) die
separat hergestellte Komponente (b) der zur
Herstellung des Diarylidpigmentes (a)
verwendeten Tetrazolösung oder der
Kupplungskomponente zugeben oder (3) die
Komponente (b) zusammen mit dem
Diarylidpigment (a) durch gleichzeitige Kupplung
herstellen.

Im Falle der Verfahrensvariante (3) enthalten
Pigment (a) und Komponente (b) die gleichen
Kupplungskomponenten. Bei der technischen
Herstellung der neuen modifizierten
Diarylidpigmente hat diese Variante
wirtschaftliche Vorteile, da die Herstellung in
einem Eintopfverfahren erfolgt.

Nach der Verfahrensvariante (1) ist es möglich,
modifizierte Diarylidpigmente herzustellen, bei
denen das Pigment (a) und die Komponente (b)
verschiedene Kupplungskomponenten aus der
Reihe der Acetoacetanilide und/oder
Phenylpyrazolone enthalten können.

Bei der Verfahrensvariante (1) ist es vorteilhaft
die Komponente (b) mit einer Suspension des
Pigments (a) zu mischen und dann das
modifizierte Diarylidpigment zu isolieren.

Mitunter ist es vorteilhaft das modifizierte
Diarylidpigment nach der Variante (2)
herzustellen.

Grundsätzlich sind auch weitere Möglichkeiten
der Vermischung des Diarylidpigmentes mit dem
Kupplungsprodukt aus der tetrazotierten
Flavonsäure möglich.

Das Kupplungsprodukt aus der tetrazotierten
Flavonsäure besitzt eine vergleichsweise geringe
Wasserlöslichkeit, wodurch seine Abscheidung
durch Filtration möglich ist. Gleich gute
Ergebnisse erhält man jedoch, wenn man
alkalische Lösungen verwendet. Besonders gute
Ergebnisse lassen sich mitunter erzielen, wenn
das Kalziumsalz verwendet wird. Die Tatsache,
daß man durch das erfindungsgemäße Verfahren
verbesserte Diarylidpigmente erhalten kann, war
überraschend, da die erfindungsgemäß
verwendeten Kupplungsprodukte aus
tetrazotierter Flavonsäure aus coloristischer Sicht
keine Farbstoffe sind und häufig einen
unattraktiven bräunlichen Farbton aufweisen.
Ebenfalls war es überraschend, daß trotz des
bräunlichen Farbtons des in ausreichender
Menge zugesetzten Kupplungsproduktes aus
tetrazotierter Flavonsäure keine nachteiligen
Farbveränderungen beim modifizierten Pigment
auftreten.

Die folgenden Ausführungsbeispiele sollen die
Erfindung zusätzlich erläutern. Die im folgenden
angegebenen Prozentangaben sind
Gewichtsprozente.

**Beispiel 1**

A) Komponente (b)
A1) Tetrazotierung
5,25 Gew.-Teile 4,4'-Diamino-2,2'-
stilbendisulfosäure werden in 30 Volumenteilen 1
n Natronlauge gelöst. Dazu gibt man 14,2
Volumenteile 2 n Natriumnitritlösung. Diese
Mischung tropft man unter Rühren bei 0° C zu 126
Volumenteilen 0,5 n Salzsäure. Die Tetrazotierung
ist nach ca. 45 min beendet. Bei Bedarf wird noch
eine geringe Menge Natriumnitritlösung
nachgegeben.
A2) Kupplung
5,95 Gew.-Teile Acetoacet-2,4-dimethylanilid
werden in 42 Volumenteilen 0,8 n Natronlauge
gelöst und durch Zugabe von 44 Volumenteilen
0,8 n Essigsäure wieder ausgefällt. Zu dieser
Suspension wird die bei der Tetrazotierung A1)
erhaltene Suspension innerhalb von 30 min
zugetropft, wobei durch gleichzeitige Zugabe von
10 %iger Natronlauge der pH-Wert im
Reaktionsmedium bei 6 gehalten wird. Die
Kupplung wird bei 20° C durchgeführt.
B) Pigment
B1) Tetrazotierung
14 Gew -Teile 3,3'-Dichlor-4 4'-diaminodiphenyl
werden in 830 Volumenteilen 0,4 n Salzsäure bei
0° C mit 7,7 Gew.-Teilen Natriumnitrit tetrazotiert.
Überschüssiges Natriumnitrit wird mit
Amidosulfonsäure entfernt. Vor Kupplungsbeginn
gibt man 8 % der bei der Umsetzung A)
erhaltenen Suspension der
Disazostilbenverbindung zur vorher geklärten
Tetrazolösung.
B2) Kupplung
23,2 Gew.-Teile Acetoacet-2,4-dimethylanilid
werden in 150 Volumenteilen 1,5 n Natronlauge
gelöst. Im Kupplungsgefäß werden 160
Volumenteile 0,5 n Essigsäure vorgelegt. Man
gibt nun soviel der alkalisch gelösten
Kupplungskomponente zur Essigsäure, daß ein
pH-Wert von 5 erreicht wird. Anschließend läßt
man gleichzeitig die Tetrazolösung aus B1) und
die restliche Lösung der Kupplungskomponente
in das Reaktionsgefäß zulaufen, wobei der pH-
Wert konstant bei 5 und die Temperatur bei 20˙ C
gehalten wird. Nach Zugabe der gesamten
Kupplungskomponente sinkt der pH-Wert bei
Zugabe der restlichen Tetrazolösung auf 3,5 ab.
Nach beendeter Kupplung wird durch Zugabe
von 10 %iger Natronlauge die
Pigmentsuspension neutralisiert. Anschließend
wird eine Lösung von 16,6 Gew.-Teilen teilweise
hydriertem Kolophoniumharz in 200
Volumenteilen 0,3 n Natronlauge zugegeben, 15
min gekocht und anschließend das Harz und die
saure Disazostilbenverbindung durch Zugabe von 10 %iger Salzsäure bei pH 5 ausgefällt. Das Endprodukt wird abfiltriert, mit Wasser ausgewaschen und bei 50 bis 60° C getrocknet.

Das so modifizierte Pigment zeigte in einer Offsetfarbe eine deutlich bessere Transparenz und höhere Farbstärke als ein auf dieselbe Weise hergestelltes Pigment, dem keine Disazostilbenverbindung, entsprechend Umsetzung A zugesetzt worden war. Auch zeigte das erfindungsgemäß hergestellte Pigment bei der Anreibung in einer Rührwerkskugelmühle bei höherer Temperatur einen geringeren Transparenz-Verlust. Beim Druckvorgang auf einer schnellaufenden Offsetmaschine trat das unerwünschte Spritzen bei Verwendung einer Farbe, die das nach B2 hergestellte Pigment enthielt, in wesentlich geringerem Maße auf.

**Beispiel 2**

Die Umsetzungen A und B wurden wie in Beispiel 1 durchgeführt, mit dem Unterschied, daß nach der Hitzebehandlung des Pigmentes bei Siedetemperatur das Harz und die zur Tetrazolösung B1 zugesetzte Disazostilbenverbindung durch Zugabe einer Lösung von 3,8 Gew.-Teilen Calciumchlorid in 30 Volumenteilen Wasser gefällt wurden.

Das isolierte und getrocknete Pigment zeigte in Offsetfarben die in Beispiel 1 beschriebenen günstigen Eigenschaften, wobei das Spritzverhalten auf der Offsetmaschine noch weiter verbessert war.

**Beispiel 3**

3.1 Tetrazotierung A
0,42 Gew.-Teile 4,4'-Diamino-2,2'-stilbendisulfosäure werden entsprechend dem in Beispiel 1, A1 (Tetrazotierung) angegebenen Verfahren tetrazotiert.
3.2 Tetrazotierung B
14 Gew.-Teile 3,3'-Dichlor-4,4'-diaminodiphenyl werden in 830 Volumenteilen 0,4 n Salzsäure bei 0° C mit 7,7 Gew.-Teilen Natriumnitrit tetrazotiert. Die Tetrazolösung wird geklärt. Überschüssiges Natriumnitrit wird mit Amidosulfonsäure entfernt.
3.3 Kupplung (Pigment)
23,7 Gew.-Teile Acetoacet-2,4-dimethylanilid werden in 150 Volumenteilen 1,5 n Natronlauge gelöst. Im Kupplungsgefäß werden 150 Volumenteile 0,5 n Essigsäure vorgelegt. Man gibt nun soviel der alkalisch gelösten Kupplungskomponente zur Essigsäure, daß ein pH-Wert von 5 erreicht wird. Anschließend läßt man gleichzeitig die Tetrazolösung B und die restliche Lösung der Kupplungskomponente in das Reaktionsgefäß laufen, wobei der pH-Wert konstant bei 5 und die Temperatur bei 20° C gehalten wird. Nach Zugabe der gesamten Kupplungskomponente sinkt der pH-Wert bei Zugabe der restlichen Tetrazolösung auf 3,5 ab.
Nach beendeter Kupplung wird durch Zugabe von 10 %iger Natronlauge der pH-Wert der Pigmentsuspension auf 10 gestellt. Anschließend wird innerhalb von 10 min. die bei der Tetrazotierung A erhaltene Suspension zugegeben. Nun gibt man eine Lösung von 16,6 Gew.-Teilen teilweise hydriertem Kolophoniumharz in 200 Volumenteilen 0,3 n Natronlauge zum Reaktionsgemisch, erhitzt auf 100° C und hält die Suspension 15 min auf Siedetemperatur. Zuletzt wird durch Zugabe von 10 %iger Salzsäure das Harz und die saure Disazostilbenverbindung bei pH 5 ausgefällt. Das Endprodukt wird abfiltriert, mit Wasser ausgewaschen und bei 50 bis 60° C getrocknet (modifiziertes Pigment Yellow 13).

Das Produkt zeigte in Offsetfarben die in Beispiel 1 angegebenen vorteilhaften Eigenschaften.

**Beispiel 4**

Die Synthese des modifizierten Pigmentes erfolgte wie in Beispiel 3 angegeben, jedoch wurde das modifizierte Pigment nach der Wärmebehandlung durch Zugeben einer Lösung von 3,8 Gew.-Teilen Calciumchlorid in 30 Volumenteilen Wasser gefällt. Das isolierte und getrocknete Pigment zeigte in Offsetfarben die in Beispiel 2 beschriebenen günstigen Eigenschaften.

**Beispiel 5**

A) Komponente (b)
A1) Tetrazotierung
5,25 Gew.-Teile 4,4'-Diamino-2,2'-stilbendisulfosäure werden in 30 ml 1 n Natronlauge gelöst. Dazu gibt man 14,2 Volumenteile 2 n Natriumnitritlösung. Diese Mischung tropft man unter Rühren bei 0° C zu 126 Volumenteilen 0,5 n Salzsäure. Die Tetrazotierung ist nach 45 min beendet. Bei Bedarf wird noch eine geringe Menge zusätzliche Natriumnitritlösung nachgegeben.
A2) Kupplung
5,13 Gew.-Teile Acetoacetanilid werden in 42 Volumenteilen 0,8 n Natronlauge gelöst und durch Zugabe von 44 Volumenteilen 0,8 n Essigsäure wieder ausgefällt. Zu dieser Suspension wird die bei der Tetrazotierung A1 erhaltene Suspension innerhalb von 30 min zugetropft, wobei durch Zugabe von 10 %iger Natronlauge im Reaktionsmedium der pH-Wert bei 6 gehalten wird. Die Kupplung wurde bei 20° C durchgeführt.
B) Pigment
B1) Tetrazotierung
14 Gew.-Teile 3,3'-Dichlor-4,4'-diaminodiphenyl werden in 830 Volumenteilen 0,4 n Salzsäure bei 0°C mit 7,7 Gew.-Teilen Natriumnitrit tetrazotiert. Überschüssiges Natriumnitrit wird mit Amidosulfonsäure entfernt. Vor Kupplungsbeginn gibt man 12 % der bei der Umsetzung A erhaltenen Suspension der Disazostilbenverbindung zur vorher geklärten Tetrazolösung.

B2) Kupplung

23,2 Gew.-Teile Acetoacet-2,4-dimethylanilid werden in 150 Volumenteilen 1,5 n Natronlauge gelöst. Im Kupplungsgefäß werden 150 Volumenteile 0,5 n Essigsäure vorgelegt. Man gibt nun soviel der alkalisch gelösten Kupplungskomponente zur Essigsäure, daß ein pH-Wert von 5 erreicht wird. Anschließend läßt man gleichzeitig die Tetrazolösung B1 und die restliche Lösung der Kupplungskomponente in das Reaktionsgefäß zulaufen, wobei der pH-Wert konstant bei 5 und die Temperatur bei 20°C gehalten wird. Nach Zugabe der gesamten Kupplungskomponente sinkt der pH-Wert bei Zugabe der restlichen Tetrazolösung auf 3,5 ab. Nach beendeter Kupplung wird die Suspension auf 100°C erhitzt und 15 min beim Sieden gehalten. Das Produkt wird abfiltriert, mit Wasser ausgewaschen und bei 50 bis 60°C getrocknet.

Das so modifizierte Pigment zeigte in einer Offsetfarbe eine deutlich bessere Transparenz und höhere Farbstärke als ein auf dieselbe Weise hergestelltes Pigment, dem keine Disazostilbenverbindung zugesetzt wurde.

**Beispiel 6**

6.1 Tetrazotierung

14 Gew.-Teile 3,3'-Dichlor-4,4'-diaminodiphenyl werden in 830 Volumenteilen 0,4 n Salzsäure bei 0°C mit 7,7 Gew.-Teilen Natriumnitrit tetrazotiert. Überschüssiges Natriumnitrit wird mit Amidosulfonsäure entfernt. Vor Kupplungsbeginn gibt man zur vorher geklärten Tetrazolösung 3,5 % der nach Beispiel 1A erhaltenen Suspension der Diazostilbenverbindung.

6.2 Kupplung

23,2 Gew.-Teile Acetoacet-2,4-dimethylanilid werden in 150 Volumenteilen 1,5 n Natronlauge gelöst. Im Kupplungsgefäß werden 180 Volumenteile 0,5 n Essigsäure vorgelegt, in der 0,5 Gew.-Teile N,N'-Penta-methyl-N-talgfett-1,3-propandiammoniumchlorid sowie 2 Gew.-Teile einer Mischung von Harzaminen, bekannt unter der Handelsbezeichnung "Amine D", gelöst sind.

Man gibt nun soviel der alkalisch gelösten Kupplungskomponente zur Essigsäure, daß ein pH-Wert von 4,5 erreicht wird. Anschließend läßt man gleichzeitig die Tetrazolösung und die restliche Lösung der Kupplungskomponente in das Reaktionsgefäß zulaufen, wobei der pH-Wert konstant bei 4,5 und die Temperatur bei 20°C gehalten wird. Nach Zugabe der gesamten Kupplungskomponente sinkt der pH-Wert bei Zugabe der restlichen Tetrazolösung auf 3,5 ab.

Nach beendeter Kupplung wird die Pigmentsuspension auf 100°C erhitzt und 30 min auf Siedetemperatur gehalten. Das Endprodukt wird abfiltriert, mit Wasser ausgewaschen und bei 50 bis 60°C getrocknet. Das so gewonnene, modifizierte Pigment besitzt in einem Tiefdruckfirnis auf Nitrocellulosebasis bei 8 %iger Pigmentierung nach 60-minütiger Anreibung in einem "Red Devil" ein deutlich günstigeres Fließverhalten und auf Polyethylenfolie einen höheren Glanz sowie eine bessere Lasur, als ein ohne Zusatz der Disazostilbenverbindung hergestelltes Pigment.

**Beispeil 7**

7.1 Tetrazotierung A

0,42 Gew.-Teile 4,4'-Diamino-2,2'-stilbendisulfosäure werden entsprechend dem in Beispiel 1, A1 (Tetrazotierung) angegebenen Verfahren tetrazotiert.

7.2 Tetrazotierung B

14 Gew.-Teile 3,3'-Dichlor-4,4'-diaminodiphenyl werden entsprechend dem in Beispiel 3, Tetrazotierung B, angegebenen Verfahren tetrazotiert.

7.3 Kupplung

20,4 Gew.-Teile Acetoacetanilid werden in 150 Volumenteilen 1,5 n Natronlauge gelöst. Im Kupplungsgefäß werden 150 Volumenteile 0,5 n Essigsäure vorgelegt. Man gibt nun soviel der alkalisch gelösten Kupplungskomponente zur Essigsäure, daß ein pH-Wert von 5 erreicht wird. Anschließend läßt man gleichzeitig die Tetrazolösung B und die restliche Lösung der Kupplungskomponente in das Reaktionsgefäß laufen wobei der pH-Wert konstant bei 5 und die Temperatur bei 20°C gehalten wird. Nach Zugabe der gesamten Kupplungskomponente sinkt der pH-Wert bei Zugabe der restlichen Tetrazolösung auf 3,5 ab. Nach beendeter Kupplung wird durch Zugabe von 10 %iger Natronlauge der pH-Wert der Pigmentsuspension auf 10 gestellt. Anschließend wird innerhalb von 10 min die bei der Tetrazotierung A erhaltene Suspension zugegeben. Nun gibt man eine Lösung von 15,3 Gew.-Teilen teilweise hydriertem Kolophoniumharz in 190 Volumenteilen 0,3 n Natronlauge zum Reaktionsgemisch, erhitzt auf 100°C und hält die Suspension 15 min beim Sieden. Zuletzt wird durch Zugabe von 10 %iger Salzsäure das Harz und die saure Disazostilbenverbindung bei pH 5 ausgefällt. Das Pigment wird abfiltriert, mit Wasser ausgewaschen und bei 50 bis 60°C getrocknet.

Das so modifizierte Pigment zeigte in einer Offsetfarbe eine deutlich bessere Transparenz und höhere Farbstärke als ein in gleicher Weise hergestelltes Pigment, dem keine Disazostilbenverbindung zugesetzt wurde. Beim Anreiben in einer Rührwerkskugelmühle unter Temperaturbeanspruchung zeigte das erfindungsgemäße Pigment einen geringeren Transparenzverlust. Beim Drucken auf einer schnellaufenden Offsetmaschine trat das unerwünschte Spritzen bei Verwendung einer mit dem erfindungsgemäßen Pigment pigmentierten Farbe in wesentlich geringerem Maße auf.

### Beispiel 8

Die Synthese des Pigmentes erfolgte wie in Beispiel 7 angegeben, jedoch wurde das Pigment nach der Wärmebehandlung das Harz und die Disazostilbenverbindung in der Wärme durch Zugeben einer Lösung von 3,5 Gew.-Teilen Calciumchlorid in 30 Volumenteilen Wasser ausgefällt.

Das isolierte und getrocknete Pigment zeigte in Offsetfarben die in Beispiel 7 beschriebenen günstigen Eigenschaften, wobei das Spritzverhalten beim Drucken auf der Offsetmaschine noch weiter verbessert war.

### Beispiel 9

9.1 Tetrazotierung

14 Gew.-Teile 3,3'-Dichlor-4,4'-diaminodiphenyl werden in 830 Volumenteilen 0,4 n Salzsäure bei 0°C mit 7,7 Gew.-Teilen Natriumnitrit tetrazotiert. Überschüssiges Natriumnitrit wird mit Amidosulfonsäure entfernt. Vor Kupplungsbeginn gibt man 8 % der in Beispiel 5A erhaltenen Suspension der Disazostilbenverbindung zur vorher geklärten Tetrazolösung.

9.2 Kupplung

20 Gew.-Teile Acetoacetanilid werden in 150 Volumenteilen 1,5 n Natronlauge gelöst. Im Kupplungsgefäß werden 150 Volumenteile 0,5 n Essigsäure vorgelegt. Man gibt nun soviel der alkalisch gelösten Kupplungskomponente zur Essigsäure, daß ein pH-Wert von 5 erreicht wird. Anschließend läßt man gleichzeitig die Tetrazolösung und die restliche Lösung der Kupplungskomponente in das Reaktionsgefäß laufen, wobei der pH-Wert konstant bei 5 und die Temperatur bei 20°C gehalten wird. Nach Zugabe der gesamten Kupplungskomponente sinkt der pH-Wert bei Zugabe der restlichen Tetrazolösung auf 3,5 ab. Nach beendeter Kupplung wird durch Zugabe von 10 %iger Natronlauge die Pigmentsuspension neutralisiert. Anschließend wird eine Lösung von 6,3 Gew.-Teilen teilweise hydriertem Kolophoniumharz in 80 Volumenteilen 0,3 n Natronlauge zugegeben, auf 100°C erhitzt und 15 min beim Sieden gehalten. Dann wird das Harz und die saure Disazostilbenverbindung durch Zugabe von 10 %iger Salzsäure bei pH 5 ausgefällt. Das Produkt wird abfiltriert, mit Wasser ausgewaschen und bei 50 bis 60°C getrocknet. Das erhaltene modifizierte Pigment unterscheidet sich in seinen coloristischen und drucktechnischen Eigenschaften von einem entsprechend, jedoch ohne Zusatz der Disazostilbenverbindung hergestellten Pigment wie das nach Beispiel 7 erhaltene Pigment von dem entsprechenden Vergleichspigment.

### Beispiel 10

Das in Beispiel 3 beschriebene Verfahren zur Herstellung des modifizierten C.I. Pigment Yellow 13 wurde auf C.I. Pigment Yellow 14 übertragen, wobei folgende Einsatzstoffe verwendet wurden:

10.1 Tetrazotierung A und B wurde wie in Beispiel 3 durchgeführt.

10.2 Kupplung:

Anstelle von 23,7 Gew.-Teilen Acetoacetat-2,4-dimethylanilid werden 22,0 Gew.-Teile Acetoacet-2-methylanilid, anstelle von 16,6 Gew.-Teilen teilweise hydriertem Kollophoniumharz 16,0 Gew.-Teile desselben Harzes angewendet. Das erhaltene modifizierte Pigment zeigte in einer Offsetdruckfarbe ähnlich günstige Eigenschaften wie das in Beispiel 1 beschriebene.

### Beispiel 11

Das in Beispiel 3 beschriebene Verfahren zur Herstellung des modifizierten C.I. Pigment Yellow 13 wurde in diesem Beispiel auf C.I. Pigment Yellow 83 übertragen.

Tetrazotierung A und B wurde wie in Beispiel 3.1 und 3.2 angegeben durchgeführt.

Die Kupplung erfolgte entsprechend den Angaben in Beispiel 3.3, jedoch wurden anstelle von 23,7 Gew.-Teilen Acetoacetat-2,4-dimethylanilid 32,2 Gew.-Teile Acetoacet-2,5-dimethoxy-4-chloranilid, anstelle einer Lösung von 16,6 Gew.-Teilen teilweise hydriertem Kollophoniumharz in 200 Volumenteilen 0,3 n Natronlauge wurden 11,3 Gew.-Teile dieses Harzes in 140 Volumenteilen 0,3 n Natronlauge angewendet. Das erhaltene Pigment zeigte in einer Offsetfarbe die gleichen günstigen Eigenschaften wie das in Beispiel 1 beschriebene Pigment.

### Beispiel 12

Das in Beispiel 3 beschriebene Verfahren zur Herstellung des modifizierten C.I. Pigments Yellow 13 wurde auf C.I. Pigment Orange 34 übertragen, wobei folgende Einsatzstoffe verwendet wurden:

12.1 Tetrazotierung A und B wurde wie in Beispiel 3.1 und 3.2 durchgeführt.

12.2 Kupplung

Anstelle von 23,7 Gew.-Teilen Acetoacet-2,4-dimethyl-anilid wurden 22,0 Gew.-Teile 1-p-Tolyl-3-methyl-pyrazolon-(5) eingesetzt. Die Kupplung des tetrazotierten 3,3'-Dichlor-4,4'-diaminodiphenyls wurde bei pH 4,5, die anschließende Kupplung der tetrazotierten 4,4'-Diamino-2,2'-stilbendisulfonsäure bei pH 11 durchgeführt.

Abweichend von Beispiel 3 wurde die Pigmentsuspension nicht geharzt, sondern nach beendeter Kupplung durch Zugabe von verd. Salzsäure sofort auf pH 5 gestellt, anschließend auf 100°C erhitzt und 20 min beim Sieden gehalten.

Das Produkt zeigte in einer Offsetfarbe gegenüber einer Probe, die kein Kupplungsprodukt aus tetrazotierter 4,4'-Diamino-2,2'-stilben-disulfonsäure und 1-p-Tolyl-3-methylpyrazolon-(5) enthielt, deutlich bessere Lasur und höhere Farbstärke.

**Beispiel 13**

13.1 Tetrazotierung
14 Gew.-Teile 3,3'-Dichlor-4,4'-diaminodiphenyl wurden entsprechend dem in Beispiel 3.2, Tetrazotierung, angegebenen Verfahren tetrazotiert.

13.2 Kupplung
Eine Mischung von 22,0 Gew.-Teilen Acetoacet-2,4-dimethylanilid und 1,2 Gew.-Teilen Acetoacet-2-methoxyanilid wurde in 150 Volumenteilen 1,5 n Natronlauge gelöst. Im Kupplungsgefäß wurden 150 Volumenteile 0,5 n Essigsäure vorgelegt. Man gibt nun soviel der alkalisch gelösten Kupplungskomponente zur Essigsäure, daß ein pH-Wert von 5 erreicht wird. Anschließend läßt man gleichzeitig die Tetrazolösung und die restliche Lösung der Kupplungskomponente in das Reaktionsgefäß laufen, wobei der pH-Wert konstant bei 5 und die Temperatur bei 20°C gehalten wird. Nach Zugabe der gesamten Kupplungskomponente sinkt der pH-Wert bei Zugabe der restlichen Tetrazolösung auf 3,5 ab. Nach beendeter Kupplung wird durch Zugabe von 10 %iger Natronlauge der pH-Wert der Pigmentsuspension auf 10 eingestellt. Anschließend werden 12 % der in Beispiel 1A erhaltenen Suspension der Disazostilbenverbindung und dann eine Lösung von 26,2 Gew.-Teilen teilweise hydriertem Kolophoniumharz in 320 Volumenteilen 0,3 n Natronlauge zugegeben. Die Suspension wird auf 100°C erhitzt und 15 min beim Sieden gehalten. Zuletzt wird durch Zugabe von 10 %iger Salzsäure das Harz und die saure Disazostilbenverbindung bei pH 5 gefällt. Das Endprodukt wird abfiltriert, mit Wasser ausgewaschen und bei 50 bis 60°C getrocknet. Das erhaltene modifizierte Pigment zeigte in einer Offsetfarbe die gleichen vorteilhaften Eigenschaften wie das in Beispiel 1 beschriebene Pigment.

**Beispiel 14**

14.1 Tetrazotierung A
0,42 Gew.-Teile 3,3'-Dimethoxy-4,4'-diaminodiphenyl wurden in 20 Volumenteilen 0,4 n Salzsäure mit 0,24 Gew.-Teilen Natriumnitrit bei 0°C tetrazotiert.

14.2 Tetrazotierung B
14 Gew.-Teile 3,3'-Dichlor-4,4'-diaminodiphenyl wurden entsprechend Beispiel 3.2, Tetrazotierung, tetrazotiert.

14.3 Kupplung
20,6 Gew.-Teile Acetoacetanilid wurden in 155 Volumenteilen 1,5 n Natronlauge gelöst. Im Kupplungsgefäß wurden 155 Volumenteile 0,5 n Essigsäure vorgelegt. Man gab soviel der alkalisch gelösten Kupplungskomponente zur Essigsäure, daß ein pH-Wert von 5 erreicht wurde. Anschließend ließ man gleichzeitig die Mischung der Tetrazolösungen A + B und die restliche Lösung der Kupplungskomponente in das Reaktionsgefäß laufen, wobei der pH-Wert bei 5 und die Temperatur bei 20°C gehalten wurde. Nach Zugabe der Kupplungskomponente sank der pH-Wert bei Zugabe der restlichen Tetrazolösung auf 3,5 ab.

Nach beendeter Kupplung wurde durch Zugabe von 10 %iger Natronlauge der pH-Wert der Pigmentsuspension auf 10 gestellt und anschließend wurden 8 % der nach Beispiel 5A erhaltenen Suspension der Disazostilbenverbindung sowie eine Lösung von 4,1 Gew.-Teilen teilweise hydriertem Kolophoniumharz in 50 Volumenteilen 0,3 n Natronlauge zur Pigmentsuspension gegeben. Das Gemisch wurde auf 100°C erhitzt und 30 min beim Sieden gehalten. Zuletzt wurde durch Zugabe von verdünnter Salzsäure pH 5 eingestellt, weitere 15 min bei 100°C gerührt; durch Zugeben von kaltem Wasser wurde das Gemisch auf 60°C abgekühlt, das Pigment filtriert und ausgewaschen. Der Preßkuchen wurde bei 50 bis 60°C getrocknet. Das erhaltene modifizierte Pigment ist im Farbton rotstichiger als das nach Beispiel 7 erhaltene bei sonst in Offsetdruckfarben praktisch gleich guten Eigenschaften.

**Patentansprüche**

1. Modifizierte Diarylidpigmente, enthaltend (a) ein Pigment, das aus einem tetrazotierten Benzidin, gekuppelt mit Acetoacetaryliden oder einem gegebenenfalls am Phenylkern substituierten 1-Phenyl-3-methyl-5-pyrazolon und (b) eine darin eingearbeitete wasserlösliche Komponente oder deren Salz, <u>dadurch gekennzeichnet</u>, daß die wasserlösliche Komponente (b) ein symmetrisch oder asymmetrisch gebautes Kupplungsprodukt einer tetrazotierten 4,4'-Diamino-2,2'-stilbendisulfosäure und gegebenenfalls substituierten Acetoacetaryliden und/oder gegebenenfalls im Phenylkern substituierten 1-Phenyl-3-methyl-5-pyrazolonen ist.

2. Modifiziertes Diarylidpigment gemäß Anspruch 1, dadurch gekennzeichnet, daß das wasserlösliche Kupplungsprodukt (b) oder dessen Salz die gleiche Kupplungskomponente enthält wie das Pigment aus tetrazotiertem, gegebenenfalls substituiertem, Benzidin.

3. Modifiziertes Diarylidpigment gemäß Anspruch 1 oder 2, dadurch gekennzeichnet, daß die wasserlösliche Komponente (b) ein Kupplungsprodukt der tetrazotierten 4,4'-Diamino-2,2'-stilbendisulfonsäure ist.

4. Verfahren zur Herstellung des modifizierten Diarylidpigmentes gemäß Anspruch 1, 2 oder 3, dadurch gekennzeichnet, daß das wasserlösliche Kupplungsprodukt (b) bzw. dessen Salz entweder der zur Pigmentherstellung verwendeten Tetrazolösung, der Kupplungskomponente oder dem bereits gebildeten Pigment (a) zugegeben wird.

5. Verfahren zur Herstellung eines modifizierten Diarylidpigmentes gemäß Anspruch 1, 2 oder 3, dadurch gekennzeichnet, daß die Herstellung des wasserlöslichen Kupplungsproduktes (b) im gleichen Reaktionsmedium wie die des Pigmentes (a) erfolgt, indem man eine tetrazotierte 4,4'-Diamino-2,2'-stilbendisulfosäure vor, während oder nach der Kupplung des Pigmentes zu einem Überschuß der Kupplungskomponente des Pigmentes gibt.

**Claims**

1. A modified diarylide pigment containing (a) a pigment which is composed of a tetrazotized benzidine, coupled to an acetoacetarylide or to a 1-phenyl-3-methyl-5-pyrazolone which is unsubstituted or substituted in the phenyl nucles, and (b), incorporated into (a), a water-soluble component or a salt thereof, wherein the water-soluble component (b) is a symmetric or asymmetric coupling product of a tetrazotized 4,4'-diamino-2,2'-stilbenedisulfonic acid and unsubstituted or substituted acetoacetarylides and/or 1-phenyl-3-methylpyrazol-5-ones which are unsubstituted or substituted in the phenyl nucleus.

2. A modified diarylide pigment as claimed in claim 1, wherein the water-soluble coupling product (b) or its salt contains the same coupling component as the pigment of tetrazotized, optionally substituted benzidine.

3. A modified diarylide pigment as claimed in claim 1 or 2, wherein the water-soluble component (b) is a coupling product of tetrazotized 4,4'-diaminodisulfonic acid.

4. A process for the preparation of a modified diarylide pigment as claimed in claim 1, 2 or 3, wherein the watersoluble coupling product (b) or its salt is added either to the tetrazo solution used for the preparation of the pigment or to the coupling component or to the already formed pigment (a).

5. A process for the preparation of a modified diarylide pigment as claimed in claim 1, 2 or 3, wherein the watersoluble coupling product (b) is prepared in the same reaction medium as the pigment (a), by adding a tetrazotized 4,4'-diamino-2,2'-stilbenedisulfonic acid, before, during or after the coupling of the pigment, to an excess of the coupling component of the pigment.

**Revendications**

1. Pigments diarylidiques modifiés, contenant (a) un pigment dérivé d'une benzidine tétra-azotée, copulée avec l'acéto-acétarylidène ou une 1-phényl-3-méthyl-5-pyrazolone éventuellement substituée sur le noyau phényle et (b) un composant hydrosoluble ou un sel de celui-ci, incorporé dans ledit pigment, caractérisé en ce que le composant hydrosoluble (b) est un produit de copulation, de structure symétrique ou asymétrique, d'un acide 4,4'-diamino-2,2'-stilbènedisulfonique tétra-azoté et d'acéto-acétarylidène éventuellement substitué et/ou de 1-phényl-3-méthyl-5-pyrazolones éventuellement substituées dans le noyau phényle.

2. Pigment diarylidique modifié selon la revendication 1, caractérisé en ce que le produit de copulation hydrosoluble (b) au son sel contient le même composant de copulation que le pigment, dérivé de benzidine tétra-azotée, éventuellement substituée.

3. Pigment diarylidique modifié selon la revendication 1 ou 2, caractérisé en ce que le composant hydrosoluble (b) est un produit de copulation de l'acide 4,4'-diamino-2,2'-stilbènedisulfonique tétra-azoté.

4. Procédé de préparation du pigment diarylidique modifié selon l'une quelconque des revendications 1 à 3, caractérisé en ce que le composant de copulation hydrosoluble (b) ou son sel est ajouté à la solution de tétra-azoïque utilisée pour la préparation du pigment, au composant de copulation ou au pigment (a) déjà préparé.

5. Procédé de préparation d'un pigment diarylidique modifié selon l'une quelconque des revendications 1 à 3, caractérisé en ce qu'on procède à la préparation du produit de copulation hydrosoluble (b) dans le même milieu réactionnel que celui du pigment (a), en ajoutant un acide 4,4'-diamino-2,2'-stilbènedisulfonique tétra-azoté, avant, pendant ou après la copulation du pigment, à un excès du composant de copulation du pigment.